**Europäisches Patentamt**

**European Patent Office**

**Office européen des brevets**

(19)

(11) Veröffentlichungsnummer: **0 096 083**

**B1**

(12) # EUROPÄISCHE PATENTSCHRIFT

(45) Veröffentlichungstag der Patentschrift:
**13.08.86**

(51) Int. Cl.⁴: **B 02 C 18/18,** B 02 C 18/44

(21) Anmeldenummer: **82104898.0**

(22) Anmeldetag: **04.06.82**

(54) **Rundlaufendes Schneidwerkzeug, insbesondere zum Stranggranulieren von Kunststoffmaterial.**

(43) Veröffentlichungstag der Anmeldung:
**21.12.83 Patentblatt 83/51**

(45) Bekanntmachung des Hinweises auf die Patenterteilung:
**13.08.86 Patentblatt 86/33**

(84) Benannte Vertragsstaaten:
**AT BE CH DE FR GB IT LI LU NL SE**

(56) Entgegenhaltungen:
**DE-A-2 064 212**
**FR-A-2 218 945**
**GB-A-2 039 783**
**US-A-1 750 941**

(73) Patentinhaber: **Fritsch, Rudolf P., Goslarerstrasse 58, D-7000 Stuttgart 31 (DE)**
Patentinhaber: **Hench, Hans Dipl.- Ing., Sonnenhalde 31, D-7851 Inzlingen (DE)**

(72) Erfinder: **Fritsch, Rudolf P., Goslarerstrasse 58, D-7000 Stuttgart 31 (DE)**
Erfinder: **Hench, Hans Dipl.- Ing., Sonnenhalde 31, D-7851 Inzlingen (DE)**

(74) Vertreter: **Rüger, Rudolf, Dr.- Ing., Webergasse 3 Postfach 348, D-7300 Esslingen/Neckar (DE)**

## Beschreibung

Die Erfindung betrifft ein rundlaufendes Schneidwerkzeug, insbesondere zum Stranggranulieren von Kunststoffmaterial, mit einem zylindrischen Werkzeugkörper, an dessen Umfang sich etwa über die Länge des Werkzeugkörpers erstreckende leistenartige Schneidelemente in regelmäßiger Verteilung auswechselbar angeordnet sind, die mittels stirnseitig aufgesetzter, axial verspannter Spannscheiben gespannt sind, welche auf den aufeinander zuweisenden Innenseiten jeweils eine koaxiale Konusfläche tragen, sowie mit im wesentlichen sektorförmigen Spannelementen, von denen jedes mit einem Klemmteil jeweils zwischen zwei benachbarte Schneidelemente ragt und über Spannflächen formschlüssig auf diesen abgestützt ist, wobei die Spannelemente stirnseitig mit den Konusflächen der Spannscheiben zusammenwirkende Spannteile aufweisen, über die sie beim axialen Verspannen der Spannscheiben, unter Spannung der Schneidelemente, radial nach innen ziehbar sind.

Die mit feststehenden Amboßmessern zusammenwirkenden Schneidelemente der Schneidwerkzeuge sind bei der Herstellung von Granulaten nach dem Stranggranulierverfahren aus stark füllstoffhaltigen Kunststoffen, beispielsweise bis zu 40% Glasfasern oder Keramikmehl gefüllten Polyamiden einem sehr starken Verschleiß unterworfen. Auch läßt sich nicht ausschließen, daß durch Fremdkörpereinwirkung gelegentlich mehrere Schneidelemente gebrauchsunfähig gemacht werden. Bei in der Praxis bekannten Werkzeugen mit auf einen Werkzeuggrundkörper aufgelöteten, aus Hartmetall bestehenden Einzelmesserschneiden ist das Ausund wieder Neu-Einlöten der Messerschneiden sehr aufwendig und wegen des Einflusses der Lötwärme auf die jeweils benachbarten Messerschneiden auch nicht unproblematisch. Diese Werkzeuge erfordern auch sehr teuere Grundkörper in Gestalt von zylindrischen Drehteilen, in die genau maßhaltig komplizierte Nuten oder Ausnehmungen eingearbeitet werden müssen, was nur auf spanabhebendem Wege geschehen kann. Eine Reparatur eines solchen Werkzeuges ist beim Benutzer in der Regel nicht möglich; sie kann nur in speziell dafür eingerichteten Werkstätten geschehen.

Das Austauschen schadhaft gewordener Schneidelemente gestattet zwar ein aus der DE-A-20 64 212 bekanntes rundlaufendes Werkzeug zum Zerschneiden und Zerschnitzeln von Fäden, Garnen u.dgl., doch erfordert dies einen verhältnismäßig aufwendigen Aufbau des Werkzeugs. Die Anordnung ist derart getroffen, daß in den eigentlichen, Achszapfen tragenden massiven Werkzeugkörper am Umfang Längsnuten eingefräst sind, in die Schneidleisten eingesetzt sind, welche ihrerseits durch stirnseitig aufgesetzte Spannscheiben lagefest gehalten sind. Die Spannscheiben weisen zu diesem Zwecke auf ihrer Innenseite jeweils eine Konusfläche auf, die entsprechend schräg gestaltete Endabschnitte der Schneidleisten übergreift. Da die Schneidleisten durch die Spannscheiben lediglich stirnseitig gehalten sind, müssen die Schneidleisten eine sehr enge Längentolerierung aufweisen, weil sich sonst ungleichmäßige Spannverhältnisse für die einzelnen Schneidleisten ergeben oder aber es muß eine elastische Dichtungsmanschette an dieser Stelle vorgesehen werden. Eine solche aus elastischem Material bestehende Dichtungsmanschette begrenzt aber die auf die Schneidelemente ausübbare Spannkraft, womit die Umfangsgeschwindigkeit, mit der dieses Werkzeug arbeiten kann, insgesamt beschränkt ist. Davon abgesehen sind sowohl der Werkzeugkörper als auch die Spannscheiben, die zusätzlich eingearbeitete Schlitze für die Schneidelemente aufweisen müssen, in der Herstellung sehr aufwendig.

Aus der US-A-1 750 941 ist ein als Kohlenbrecher bestimmtes rundlaufendes Werkzeug bekannt, bei dem die Anordnung derart getroffen ist, daß auf die stufenförmig profilierte Umfangsfläche eines massiven Werkzeugkörpers die parallelflankig begrenzten leistenartigen Schneidelemente schmalseitig aufgesetzt und sodann durch dazwischenliegende sektorförmige Spannelemente verspannt sind. Die Spannelemente sind stirnseitig mit nasenförmigen Spannteilen ausgebildet, die mit Konusflächen von Spannscheiben zusammenwirken, von denen eine an dem massiven Werkzeugkörper angeformt und die andere in Gestalt eines auf den Werkzeugkörper aufschraubbaren Gewinderinges ausgebildet ist. Bei diesem Werkzeug sind die Schneidelemente zwischen benachbarten Spannelementen lediglich reibschlüssig gehalten, so daß die Spannung aller Schneidelemente verlorengeht, wenn sich eines der Schneidelemente aus irgendwelchen Gründen im Betrieb lockern sollte. Außerdem ist das Aufschrauben des als Spannscheibe ausgebildeten Gewinderinges auf dem massiven Werkzeugkörper deshalb problematisch, weil mit zunehmender Spannung auch die zwischen den nasenartigen Spannteilen der Spannelemente und der Konusfläche des Gewinderinges auftretende Reibung zunimmt, mit dem Ergebnis, daß es schwierig oder sogar unmöglich ist, ein exakt vorbestimmtes Maß der Spannung der Schneidelemente zu erzielen.

Aufgabe der Erfindung ist es deshalb, ein insbesondere für die Kunststoffgranulierung geeignetes rundlaufendes Schneidwerkzeug zu schaffen, das sich bei einfachem Aufbau und leichter Austauschbarkeit der Schneidelemente dadurch auszeichnet, daß es eine exakte gleichmäßige Spannung der Schneidelemente gewährleistet, so daß das Schneidwerkzeug mit hohen Umfangsgeschwindigkeiten arbeiten kann.

Zur Lösung dieser Aufgabe ist das eingangs genannte Schneidwerkzeug erfindungsgemäß dadurch gekennzeichnet, daß der kreisringförmige Werkzeugkörper lediglich durch die sektorförmigen Spannelemente gebildet ist, die durch die zum Aufsetzen des Schneidwerkzeuges auf eine Welle eingerichtete Nabenteile aufweisenden Spannscheiben zentriert sind, und daß die Schneidelemente an den Spannflächen der Spannelemente formschlüssig gespannt sind.

Der zylindrische Werkzeugkörper ist lediglich durch die sektorförmigen Spannelemente gebildet, die durch die Spannscheiben zentriert sind, womit sich ein sehr einfacher Aufbau ergibt.

Die sektorförmigen Spannelemente und die Schneidelemente können mit einfachen Mitteln mit hoher Genauigkeit hergestellt werden. Da die Spannverhältnisse für alle Schneidelemente gleich sind, d.h. an allen Spannelementen gleich große definierte und stabile Spannkräfte angreifen, zeichnet sich das Schneidwerkzeug durch geringe Unwuchten aus, was bei hohen Drehzahlen einen vibrationsarmen Lauf zur Folge hat. Gleichzeitig sind die Schneidelemente über ihre gesamte axiale Länge mit hoher Stabilität formschlüssig gespannt, wobei unter Verwendung lauter gleicher Spann- und Schneidelemente auch Schneidwerkzeuge mit verhältnismäßig großem Durchmesser (320 mm), die sich durch gleiche Schneidverhältnisse wie Werkzeuge mit kleinerem Durchmesser auszeichnen, ohne weiteres hergestellt werden können.

Für Verschleißversuche können in einem Werkzeug auch Schneidelemente aus unterschiedlichem Material gespannt werden, während andererseits die Ersatzteilhaltung sehr einfach und rationell ist.

Die Einleitung der Spannkräfte in die Schneidelemente über die Spannflächen erfolgt gleichmäßig, mit dem Ergebnis, daß keine örtlichen Spannungskonzentrationen, hervorgerufen durch ungleichmäßig verteilte Spannkräfte, auftreten können. Unabhängig davon, ob die Schneidelemente neu oder bereits teilweise abgenützt sind, weisen sie stets die gleiche Einspannung bezüglich der Werkzeugachse auf. Es können deshalb beim Austausch von Schneidelementen die neu eingesetzten Schneidelemente mittels einer Schleifvorrichtung auf einfache Weise mit ihren Schneiden auf den Flugkreis der gebrauchten Schneidelemente gebracht werden, was bedeutet, daß lediglich eine sehr kleine Schleifzugabe für den Rundschliff erforderlich ist, wobei sich beim Nachschleifen der Zahngrund nicht verändert.

Der kreisringförmige Werkzeugkörper weist zweckmäßigerweise gemeinsam mit den gespannten Schneidelementen in den mit dem Schneidgut in Berührung kommenden Bereichen eine vollständig geschlossene Oberfläche auf, was für das Stranggranulieren von Kunststoffmaterial von besonderer Bedeutung ist. Mit dem Entfallen aller Ablagerungsmöglichkeiten für Kunststoffreste ist nämlich beim Einsatz eines solchen Schneidwerkzeuges ein einfacher Farbwechsel bei dem Kunststoffmaterial möglich.

Die Spannscheiben selbst können unmittelbar auf eine Welle aufgesetzt werden, doch können sie auch zum Aufsetzen des Schneidwerkzeuges auf eine Welle eingerichtete Nabenteile aufweisen. Im übrigen sind die Spannscheiben zweckmäßigerweise mittels durchgehender achsparalleler Zuganker gegeneinander verspannt.

Die Spannelemente können einzelne getrennte Teile sein, die, wie erwähnt, im Abstand nebeneinander liegend in Umfangsrichtung lediglich über ihre Klemmteile und die dazwischen eingefügten Schneidelemente gegeneinander verspannt sind. Um die Zahl der beim Zusammenbau des Schneidwerkzeuges zu handhabenden Teile zu verringern, können die Schneidelemente aber auch jeweils paarweise zu im wesentlichen U-förmigen Doppelspannelemente miteinander verbunden sein, wobei die Verbindungsstelle der beiden Spannelemente eines Doppelspannelementes im Bereiche des zwischen den Schenkeln liegenden Bügels der U-Form biegeelastisch ausgebildet ist.

In einer weiteren Ausführungsform können die Spannelemente auch unter Ausbildung eines einheitlichen, ringförmigen, radial elastischen Bauteiles biegeelastisch miteinander verbunden sein, womit sich eine besonders einfache Montage und Demontage des Schneidwerkzeuges ergibt.

Bei dieser Ausführungsform kann das ringförmige, radial elastische Bauteil im Bereiche jedes Spannelementes wenigstens einen randoffenen Radialschlitz aufweisen, der im entspannten Zustand ein einfaches Einschieben des jeweils zugeordneten Schneidelementes gestattet. Zur weiteren Erhöhung der Radialelastizität des ringförmigen Bauteiles kann dieses in den Bereichen zwischen jeweils zwei benachbarten Spannelementen noch radial nach außen zu randoffene Radialschlitze aufweisen.

Die Spannelemente können bei all den erwähnten Ausführungsformen auch als Feingußteile hergestellt werden, somit sich eine sehr wirtschaftliche Fertigung ergibt.

Die Schneidelemente weisen eine ihre formschlüssige Halterung für die Spannflächen der Spannelemente erlaubende Querschnittsgestalt auf, die sich an den jeweiligen Erfordernissen des Einsatzzweckes des Schneidwerkzeuges orientiert. Besonders vorteilhafte Verhältnisse ergeben sich, wenn die Schneidelemente eine etwa X-förmige Querschnittsgestalt mit zwei wahlweise einsetzbaren Schneidkanten aufweisen.

Die beiden Spannflächen jedes Schneidelementes können dabei schräg aufeinander zugerichtet verlaufend, symmetrisch zu einem die Werkzeugkörperachse schneidenden Radius angeordnet sein, womit gleiche Spannverhältnisse an allen Spannflächen gewährleistet sind.

Die Schneidelemente selbst können einstückig aus härtbarem Chromstahl, Stellitfeinguß oder Hartmetall wahlweise hergestellt sein, doch ist es wegen der günstigen gleichmäßigen großflächigen Spannung auch möglich, sie aus Hartkeramik bestehen zu lassen. Eine weitere Möglichkeit besteht darin, daß die Schneidelemente durchgehende, ein- oder aufgelötete Schneidteile aus Hartmetall aufweisen, durch welche die Schneidkanten gebildet sind.

Die Schneidelemente können parallel oder schräg zur Achse des Werkzeugkörpers verlaufend angeordnet sein; auch eine spiralige Ausbildung ist möglich.

Die Spannelemente sind im Bereiche ihrer mit den Konusflächen der Spannscheiben zusammenwirkenden Teile so gestaltet, daß beim axialen Verspannen der Spannscheiben die Spannelemente unter Verklemmung der Schneidelemente radial nach innen gezogen werden. Dabei ergeben sich besonders günstige Verhältnisse, wenn die nasenartig ausgebildeten Spannteile der Spannelemente den Konusflächen der Spannscheiben entsprechend gestaltete konische Flächen tragen, die ihrerseits auch leicht ballig ausgebildet sein können, womit die beim Festspannen auftretende Reibung herabgesetzt wird.

In der Zeichnung ist ein Ausführungsbeispiel des Gegenstandes der Erfindung dargestellt. Es zeigen:

Fig. 1 ein Schneidwerkzeug gemäß der Erfindung, geschnitten längs der Linie I-I der Fig. 3, in einer Seitenansicht und im Ausschnitt,

Fig. 2 das Schneidewerkzeug nach Fig. 3, geschnitten längs der Linie II-II der Fig. 3 in einer Seitenansicht und im Ausschnitt,

Fig. 3 das Schneidwerkzeug nach Fig. 1, 2, geschnitten längs der Linie III-III der Fig. 1, in einer Seitenansicht und im Ausschnitt,

Fig. 4 ein Schneidwerkzeug gemäß der Erfindung, in einer zweiten Ausführungsform, im Querschnitt, im Ausschnitt und in einer Darstellung entsprechend Fig. 3, und

Fig. 5 ein Schneidwerkzeug gemäß der Erfindung, in einer dritten Ausführungsform, im Querschnitt, im Ausschnitt und in einer Darstellung entsprechend Fig. 3.

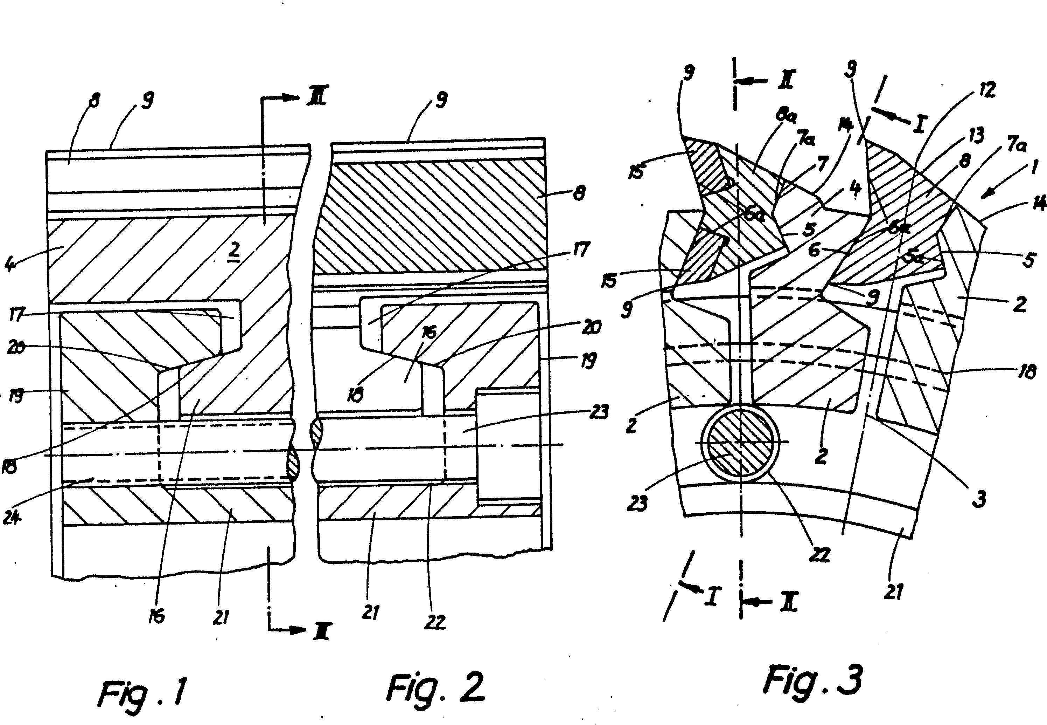

Das in den Fig. 1 bis 5 in drei Ausführungsformen dargestellte Schneidwerkzeug dient insbesondere für die Stranggranulierung von thermoplastischen Kunststoffen. Es kann aber auch bei entsprechender Gestaltung der Schneidengeometrie zur Bearbeitung von Holz, Metallen, Kunststoffen und dergleichen eingesetzt werden.

Bei der Ausführungsform nach den Fig. 1 bis 3 besteht der Werkzeugkörper 1 aus einer Anzahl im wesentlichen sektorförmiger Spannelemente 2, die unter Ausbildung eines Kreisringes (vergl. Fig. 3) in Umfangsrichtung nebeneinander derart angeordnet sind, daß zwischen zwei benachbarten Spannelementen 2 jeweils ein Radialspalt 3 verbleibt.

Jedes der Spannelemente 2 weist ein radial außen liegendes, angeformtes, im wesentlichen keil- oder dreieckförmiges Klemmteil 4 auf, das über die Länge des Werkzeugkörpers 1 sich erstreckt. An dem Klemmteil 4 sind zwei schräg aufeinander zu verlaufende Spannflächen 5, 6 ausgebildet, wobei an die Spannfläche 5 eine sich radial nach außen gerichtete Abstützfläche 7 anschließt, die mit der Spannfläche 5 einen stumpfen Winkel einschließt.

Das Klemmteil 4 jedes Spannelementes 2 ragt in der insbesondere aus Fig. 3 ersichtlichen Weise jeweils zwischen zwei benachbarte, leistenartige, im wesentlichen über die Länge des Werkzeugkörpers 1 durchgehende Schneidelemente 8, 8a, von denen in Fig. 3 zwei verschiedene Ausführungsformen dargestellt sind.

Die Schneidelemente 8 weisen eine im wesentlichen X-förmige Querschnittsgestalt auf und sind ihrerseits jeweils mit Spannflächen 6a, 5a sowie mit einer Abstützfläche 7a versehen, über die das jeweils zugeordnete Klemmteil 4 mit seinen Spannflächen 5, 6 bzw. seiner Abstützfläche 7 auf zwei Klemmleisten 8 bzw. 8a abgestützt ist.

Zufolge der im Querschnitt im wesentlichen dreieckförmigen Gestaltung des von den Spannflächen 5, 6 begrenzten Klemmteiles 4 eines solchen Spannelementes 2 sind die Schneidelemente 8, 8a radial einwandfrei formschlüssig zwischen den Spannflächen 5, 6 gehalten.

Jedes Schneidelement 8, 8a verfügt über zwei nacheinander abarbeitbare Schneidkanten 9, von denen die radial außenliegenden Schneidkanten 9 jeweils auf einem gemeinsamen Flugkreis laufen. Im übrigen können die Schneidelemente 8, 8a entweder parallel oder schräg zur Achse des Werkzeugkörpers 1 verlaufend angeordnet sein.

Die Spannflächen 5a, 6a eines Schneidelementes 8 bzw. 8a sind jeweils symmetrisch zu einem die Werkzeugkörperachse schneidenden Radius 12 angeordnet. Außerdem ist die mit dem zu bearbeitenden Material in Berührung kommende radial außenliegende Umfangsfläche des ganzen Schneidwerkzeuges einheitlich geschlossen ausgebildet, so daß Materialablagerungen ausgeschlossen sind. Dies ist dadurch erreicht, daß die Umfangsfläche jedes Schneidelementes 8, 8a bei 13 in die entsprechende anschließende Umfangsfläche 14 des benachbarten Klemmteiles 4 nahtlos übergeht, während sich die Umfangsfläche 14 des Klemmteils 4 ihrerseits wieder an die Brust des nachfolgenden Schneidelementes 8 bzw. 8a im Bereiche der Schnittlinie der beiden Spannflächen 6a anschließt.

Die Schneidelemente 8 sind durchgehend aus einem entsprechend verschleißfesten Material, bspw. einem härtbaren Chromstahl, Stellitfeinguß oder Hartmetall hergestellt. Sie können auch durchgehend aus Schneidkeramik bestehen.

Demgegenüber weisen die Schneidelemente 8a einen in der Regel aus Stahl bestehenden Trägerkörper auf, in den im Bereiche der Spannflächen 6a Hartmetalleisten 15 eingelötet sind, welche die Schneiden 9 tragen.

Jedes der Spannelemente 2 ist stirnseitig mit einem angeformten, axial vorstehenden nasenartigen Spannteil 16 versehen, das in dem Bereich radial innerhalb des zugeordneten Klemmteils 4 liegt und mit diesem eine ringnutartige Ausnehmung 17 begrenzt. Die radial nach außen weisende Umfangsfläche 18 jedes der nasenartigen Spannteile ist als leicht ballige Konusfläche ausgebildet, wie dies insbesondere aus den Fig. 1 und 2 zu ersehen ist.

Auf die in der beschriebenen Weise mit den dazwischengeklemmten Schneidelementen 8, 8a kreisringartig angeordneten Spannelemente 2 sind stirnseitig zwei Spannplatten 19 aufgesetzt, die auf den einander zuweisenden Innenflächen jeweils eine Ringkonusfläche 20 tragen, die mit den konischen Flächen 18 der Spannteile 16 der einzelnen Spannelemente 2 zusammenwirkt. Die beiden Spannscheiben 19 sind außerdem jeweils mit einem angeformten Nabenteil 21 ausgebildet; die beiden Nabenteile 21 begrenzen eine durchgehende Bohrung, mit der das ganze Schneidwerkzeug auf eine nicht weiter dargestellte Welle oder dergl. drehfest aufgesetzt werden kann.

Durch entsprechende gleichmäßig über den Umfang verteilte Bohrungen 22 der in Fig. 2 dargestellten Spannscheibe 19 verlaufen in Gestalt von Schrauben ausgebildete Zuganker 23, die mit einem Gewindeteil in entsprechende Gewindebohrungen 24 der in Fig. 1 veranschaulichten anderen Spannscheibe 19 eingeschraubt sind.

Wenn die Zuganker 23 angezogen werden, werden die beiden Spannscheiben 19 axial aufeinander zugezogen, wobei sie mit ihren Ringkonusflächen 20 auf den konischen Flächen 18 der Spannteile 16 der Spannelemente 2 gleiten. Dabei werden die Spannelemente 2 zentriert und radial nach innen gezogen, mit dem Ergebnis, daß die Schneidelemente 8, 8a jeweils zwischen den Spannflächen 5, 6 der keil- oder dreieckförmigen Klemmteile 4 festgespannt werden.

Die Schneidelemente 8, 8a sind dabei in Radialrichtung durch die Abstützflächen 7 der Klemmteile 4 lagefest bezüglich der Spannelemente 2 fixiert.

Da alle Schneidelemente 8 bzw. 8a und alle Spannelemente 2 gleichgestaltet sind, werden an allen Schneidelementen 8 bzw. 8a auch die gleichen Spannkräfte wirksam, so daß sich über die gesamte axiale Länge des Schneidwerkzeuges eine stabile gleichmäßige Spannung der Schneidelemente 8 bzw. 8a ergibt.

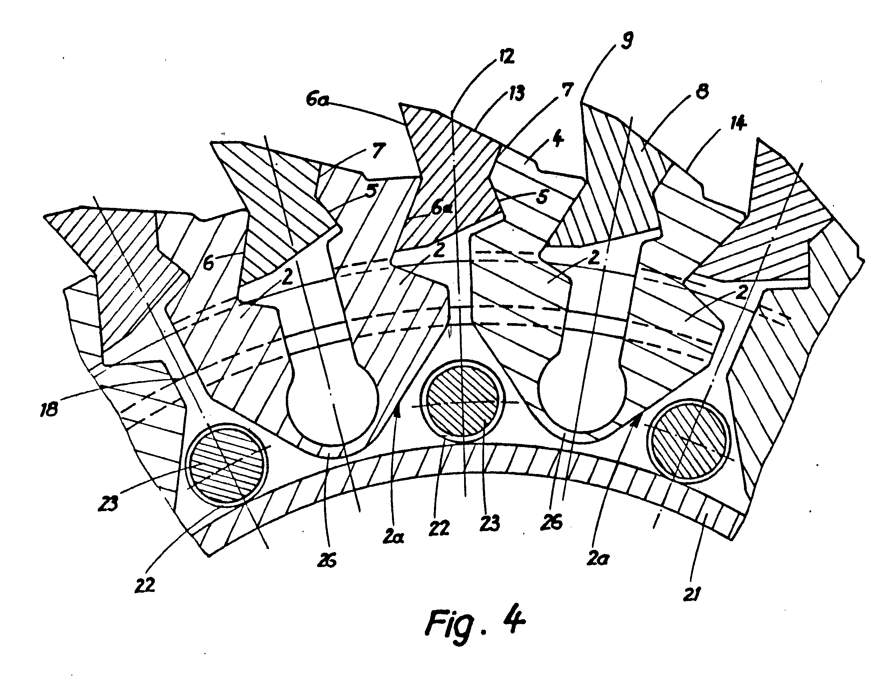

Bei der Ausführungsform nach Fig. 4 sind die Spannverhältnisse der einzelnen Schneidelemente 8 grundsätzlich gleich wie bei der Ausführungsform nach den Fig. 1 bis 3. Gleiche Teile sind deshalb mit gleichen Bezugszeichen versehen, wobei sich eine nochmalige Beschreibung der erläuterten Spannung der Schneidelemente 8 mittels der endseitig aufgesetzten Spannscheiben 19 erübrigt.

Während aber bei der Ausführungsform nach den Fig. 1 bis 3 die sektorförmigen Spannelemente 2 jeweils einzelne getrennte Teile sind, ist bei der Ausführungsform nach Fig. 4 die Anordnung derart getroffen, daß die Spannelemente 2 jeweils paarweise zu im wesentlichen U-förmigen Doppelspannelementen 2a verbunden sind. Die Verbindungsstelle der beiden Spannelemente 2 eines solchen Doppelspannelementes 2a ist biegeelastisch ausgebildet. Sie liegt in dem die zwei starren, die Schenkel des U-förmigen Doppelspannelementes 2a bildenden Spannelemente 2 miteinander verbindenden, verhältnismäßig dünnen Bügel 26.

Ein Vorteil dieser Ausführungsform liegt darin, daß die Zahl der bei der Montage einzeln zu handhabenden Spannelemente gegenüber der Ausführungsform nach den Fig. 1 bis 3 auf die Hälfte reduziert ist.

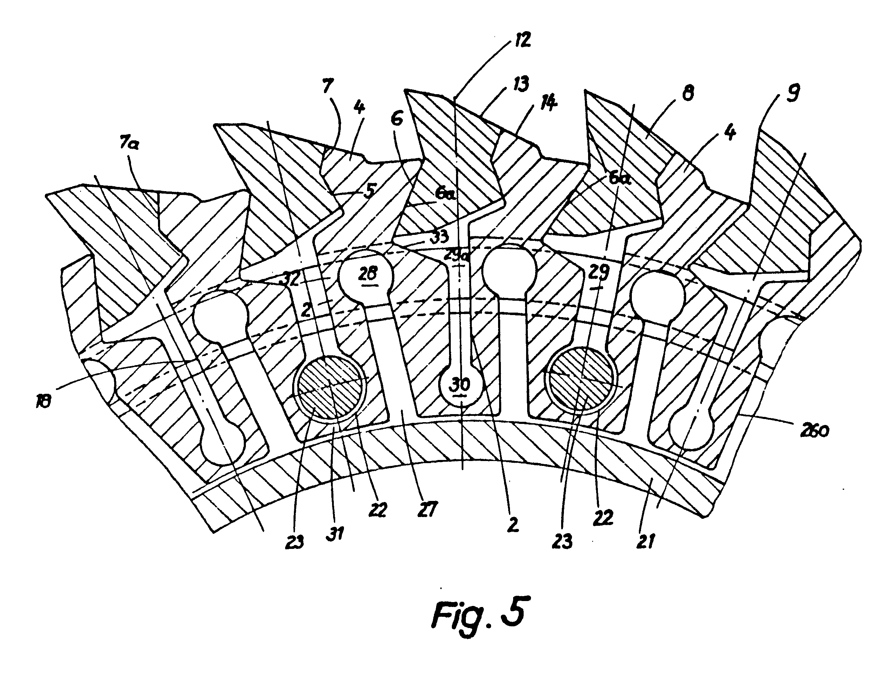

Eine weitere Ausführungsform des Schneidwerkzeuges ist in Fig. 5 veranschaulicht. Auch für diese Ausführungsform gilt hinsichtlich der Spannung der Schneidelemente 8 das bereits im Zusammenhang mit der Ausführungsform nach den Fig. 1 bis 3 Gesagte. Es sind deshalb auch hier gleiche Teile mit gleichen Bezugszeichen versehen, wobei auf die Erläuterung der Spannung der Schneidelemente 8 mittels der Spannscheiben 19 nach Fig. 1, 2 verzichtet ist.

Bei dieser Ausführungsform sind die Spannelemente 2 unter Ausbildung eines einheitlichen ringförmigen radialelastischen Bauteiles 260 biegeelastisch miteinander verbunden. Das ringförmige Bauteil 260 weist zu diesem Zwecke im Bereiche jedes Spannelementes 2 wenigstens einen radial nach innen zu randoffenen Radialschlitz 27 auf, der endseitig in einer Bohrung 28 größeren Durchmessers endet. Jeweils zwischen zwei benachbarten Spannelementen 2 ist ein radial nach außen zu randoffener Radialschlitz 29 bzw. 29a angeordnet, der endseitig ebenfalls in eine Bohrung 30 bzw. 22 größeren Durchmessers übergeht, wobei die Bohrungen 22 die Zuganker 23 aufnehmen. Durch die Radialschlitze 27, 29, 29a, von denen die Radialschlitze 27 mit den Bohrungen 28 lediglich bis an die massiven Klemmteile 4 heranragen, kann das ringförmige Bauteil 260 im Zusammenwirken der konischen Flächen 18 mit den Konusflächen 20 der Spannscheiben 19 in bereits beschriebener Weise radial nach innen bewegt werden, ohne daß dazu eine plastische Verformung irgendwelcher Teile erforderlich wäre. Die Biegequerschnitte 31, 32, 33 verhältnismäßig kleinen Querschnitts gestatten es, schon mit verhältnismäßig kleinen, von den Konusflächen 20 der Spannscheiben 19 aufzubringenden Kräften eine sehr stabile Verklemmung der Schneidelemente 8 zu erzielen.

**Patentansprüche**

1. Rundlaufendes Schneidwerkzeug, insbesondere zum Stranggranulieren von Kunststoffmaterial, mit einem zylindrischen Werkzeugkörper (1), an dessen Umfang sich etwa über die Länge des Werkzeugkörpers erstreckende leistenartige Schneidelemente (8, 8a) in regelmäßiger Verteilung auswechselbar angeordnet sind, die mittels stirnseitig aufgesetzter, axial verspannter Spannscheiben (19) gespannt sind, welche auf den aufeinander zuweisenden Innenseiten jeweils eine koaxiale Konusfläche (20) tragen, sowie mit im wesentlichen sektorförmigen Spannelementen, von denen jedes mit einem Klemmteil (4) jeweils zwischen zwei benachbarte Schneidelemente ragt und über Spannflächen (5, 6) formschlüssig auf diesen abgestützt ist, wobei die Spannelemente (2) stirnseitig mit den Konusflächen der Spannscheiben zusammenwirkende Spannteile aufweisen, über die sie beim axialen Verspannen der Spannscheiben, unter Spannung der Schneidelemente radial nach innen ziehbar sind, dadurch gekennzeichnet, daß der kreisringförmige Werkzeugkörper (1) lediglich durch die sektorförmigen Spannelemente (2, 2a) gebildet ist, die durch die zum Aufsetzen des Schneidwerkzeuges auf eine Welle eingerichtete Nabenteile (21) aufweisenden Spannscheiben (19) zentriert sind, und daß die Schneidelemente (8, 8a) an den Spannflächen (5, 5a; 6, 6a) der Spannelemente (2, 2a) formschlüssig gespannt sind.

2. Schneidwerkzeug nach Anspruch 1, dadurch gekennzeichnet, daß der kreisringförmige Werkzeugkörper (1) gemeinsam mit den gespannten Schneidelementen (8, 8a) in den mit dem Schneidgut in Berührung kommenden Bereichen eine vollständig geschlossene Oberfläche aufweist.

3. Schneidwerkzeug nach einem der vorhergehenden Ansprüche, dadurch gekennzeichnet, daß die beiden Spannscheiben (19) mittels durchgehender achsparalleler Zuganker (23) gegeneinander verspannt sind.

4. Schneidwerkzeug nach einem der vorhergehenden Ansprüche, dadurch gekennzeichnet, daß die Spannelemente (2) jeweils paarweise zu im wesentlichen U-förmigen Doppelspannelementen (2a) miteinander verbunden sind und daß die Verbindungsstelle der beiden Spannelemente (2) eines Doppelspannelementes (2a) im Bereiche des zwischen den Schenkeln liegenden Bügels (26) der U-Form biegeelastisch ausgebildet ist.

5. Schneidwerkzeug nach einem der Ansprüche 1 bis 4, dadurch gekennzeichnet, daß die Spannelemente (2) unter Ausbildung eines einheitlichen ringförmigen radialelastischen Bauteils (260) biegeelastisch miteinander verbunden sind.

6. Schneidwerkzeug nach Anspruch 5, dadurch gekennzeichnet, daß das ringförmige Bauteil (260) im Bereiche jedes Spannelementes (2) wenigstens einen randoffenen Radialschlitz (27) aufweist.

7. Schneidwerkzeug nach Anspruch 5 oder 6, dadurch gekennzeichnet, daß das ringförmige Bauteil (260) in den Bereichen zwischen jeweils zwei benachbarten Spannelementen (2) radial nach außen zu randoffene Radialschlitze (29, 29a) aufweist.

8. Schneidwerkzeug nach einem der vorhergehenden Ansprüche, dadurch gekennzeichnet, daß die Schneidelemente (8) eine etwa X-förmige Querschnittsgestalt mit zwei wahlweise einsetzbaren Schneidkanten (9) aufweisen.

9. Schneidwerkzeug nach Anspruch 8, dadurch gekennzeichnet, daß die beiden Spannflächen (5a, 6a) jedes Schneidelementes (8, 8a) schräg aufeinander zugerichtet verlaufend symmetrisch zu einem die Werkzeugkörperachse schneidenden Radius (12) angeordnet sind.

10. Schneidwerkzeug nach einem der vorhergehenden Ansprüche, dadurch gekennzeichnet, daß die Schneidelemente (8a) durchgehende, ein- oder aufgelötete Schneidteile (15) aus Hartmetall aufweisen, durch welche die Schneidkanten (9) gebildet sind.

11. Schneidwerkzeug nach einem der Ansprüche 1 bis 9, dadurch gekennzeichnet, daß die Schneidelemente (8) aus Hartkeramik bestehen.

12. Schneidwerkzeug nach einem der vorhergehenden Ansprüche, dadurch gekennzeichnet, daß die nasenartig ausgebildeten Spannteile (16) der Spannelemente (2, 2a) den Konusflächen (20) der Spannscheiben (19) entsprechend gestaltete konische Flächen (18) tragen.

13. Schneidwerkzeug nach Anspruch 12, dadurch gekennzeichnet, daß die konischen Flächen (18) leicht ballig ausgebildet sind.

14. Schneidwerkzeug nach einem der vorhergehenden Ansprüche, dadurch gekennzeichnet, daß die Schneidelemente (8, 8a) schräg zur Achse des Werkzeugkörpers (1) verlaufend angeordnet sind.

15. Schneidwerkzeug nach einem der vorhergehenden Ansprüche, dadurch gekennzeichnet, daß die Spannelemente (2, 2a) als Feingußteile ausgebildet sind.

**Claims**

1. A rotatory cutting tool, especially for the continuous granulation of synthetic plastics material, having a cylindrical tool body (1) on the circumference of which strip-type cutting elements (8, 8a) extending substantially over the length of the tool body are replaceably arranged in regular distribution and which are clamped by means of axially braced clamping discs (19) fitted on the ends, which each carry a coaxial taper face (20) on the inner sides facing one another, and having clamping elements (2) of substantially sector form, each of which protrudes with a clamping part (4) between two adjacent cutting elements and is supported in shape-engaging manner through clamping faces (5, 6) on the cutting elements, while the clamping elements (2) comprise clamping parts co-operating at the ends with the taper faces of the clamping discs, by means of which parts they can be drawn radially inwards in the axial tightening of the clamping discs, bracing the cutting elements, characterised in that the annular tool body (1) is formed solely by the clamping elements (2, 2a) of sector form which are centred by the clamping discs (19) which comprise hub parts (21) equipped for the fitting of the cutting tool upon a shaft, and in that the cutting elements (8, 8a) are clamped in shape-engaging manner on the clamping faces (5, 5a; 6, 6a) of the clamping elements (2, 2a).

2. A cutting tool according to claim 1, characterised in that the annular tool body (1) in common with the clamped cutting elements (8, 8a) exhibits a completely closed surface in the regions which come into contact with the material to be cut.

3. A cutting tool according to any one of the preceding claims, characterised in that the two clamping discs (19) are tightened against one another by means of through-passing tie rods (23) with mutually parallel axes.

4. A cutting tool according to any one of the preceding claims, characterised in that the clamping elements (2) are connected with one another in pairs to form substantially U-shaped double clamping (2a) and in that the connection point of the two clamping elements (2) of a double clamping element (2a) is made flexurally elastic in the region of the bend (26) lying between the legs of the U-shape.

5. A cutting tool according to any one of claims 1 to 4, characterised in that the clamping elements (2) are flexurally elastically connected with one another, thereby to form a uniform annular radially elastic component (260).

6. A cutting tool according to claim 5, characterised in that the annular component (260) comprises at least one radial slot (27) open to the edge, in the region of each clamping element (2).

7. A cutting tool according to claim 5 or 6, characterised in that the annular component (260) comprises radial slots (29, 29a) open to the edge radially outwards, in the regions between each two adjacent clamping elements (2).

8. A cutting tool according to any one of the preceding claims, characterised in that the cutting elements (8) exhibit a somewhat X-shaped configuration in cross-section, with two optionally usable cutting edges (9).

9. A cutting tool according to claim 8, characterised in that the two clamping faces (5a, 6a) of each cutting element (8, 8a), directed obliquely towards one another, are arranged symmetrically in relation to a radius (12) intersecting the axis of the tool body.

10. A cutting tool according to any one of the preceding claims, characterised in that the cutting elements (8a) comprise through-passing, soldered-in or soldered-on cutting parts (15) of hard metal by which the cutting edges (9) are formed.

11. A cutting tool according to any one of claims 1 to 9, characterised in that the cutting elements (8) consist of hard ceramics.

12. A cutting tool according to any one of the preceding claims, characterised in that the clamping parts (16), of nose-type formation, of the clamping elements (2, 2a) carry conical faces (18) shaped in accordance with the taper faces (20) of the clamping discs (19).

13. A cutting tool according to claim 12, characterised in that the conical faces (18) are made slightly spherically convex.

14. A cutting tool according to any one of the preceding claims, characterised in that the cutting elements (8, 8a) are arranged to extend obliquely of the axis of the tool body (1).

15. A cutting tool according to any one of the preceding claims, characterised in that the clamping elements (2, 2a) are made as high-quality castings.

## Revendications

1. Outil de coupe rotatif, notamment pour couper en granulés des boudins de matériaux à base de matières plastiques, avec un corps d'outil cylindrique (I), sur la circonférence duquel sont régulièrement répartis des éléments de coupe (8, 8a) remplaçables en forme de barrettes qui s'étendent sensiblement sur toute la longueur du corps d'outil et sont maintenus, au moyen de disques de serrage (19) rapportés du côté frontal, serrés dans le sens axial et portant respectivement, sur leurs côtés intérieurs en vis-à-vis, une face conique (20) coaxiale, et avec des éléments de serrage (2) sensiblement en forme de secteurs, qui font chacun saillie entre deux éléments de coupe voisins par une partie de coincement (4) et qui s'appuient par complémentarité de forme sur ces éléments de coupe par l'intermédiaire de faces de serrage (5, 6), les éléments de serrage (2) présentant sur leur côté frontal des parties de serrage qui coopèrent avec les faces coniques des disques de serrage et par l'intermédiaire desquelles les éléments de serrage peuvent être tirés radialement vers l'intérieur lors du serrage axial des disques de serrage, les éléments de coupe étant alors serrés, caractérisé par le fait que le corps d'outil (1) en forme de couronne est uniquement formé par les éléments de serrage (2, 2a) en forme de secteurs, lesquels sont centrés par les disques de serrage (19) qui présentent des parties de moyeu (21) établies pour le montage de l'outil de coupe sur un arbre, et que les éléments de coupe (8, 8a) sont serrés par complémentarité de forme contre les faces de serrage (5, 5a; 6, 6a) des éléments de serrage (2, 2a).

2. Outil de coupe selon revendication 1, caractérisé par le fait que le corps d'outil (1) en forme de couronne présente conjointement avec les éléments de coupe (8, 8a) serrés, dans les zones qui viennent en contact avec le produit à couper, une surface entièrement fermée.

3. Outil de coupe selon une des revendications précédentes, caractérisé par le fait que les deux disques de serrage (19) sont serrés l'un contre l'autre au moyen de tirants (23) traversants à axes parallèles.

4. Outil de coupe selon une des revendications précédentes, caractérisé par le fait que les éléments de serrage (2) sont réunis par paires en éléments de serrage doubles (2a) sensiblement en forme de U, et que les points de jonction des deux éléments de serrage (2) d'un élément de serrage double (2a) sont élastiques en flexion au niveau de l'âme (26) du U située entre les deux branches.

5. Outil de coupe selon une des revendications 1 à 4, caractérisé par le fait que les éléments de serrage (2) sont réunis avec élasticité de flexion, en formant une pièce unitaire (260) de forme annulaire, à élasticité radiale.

6. Outil de coupe selon revendication 5, caractérisé par le fait que la pièce annulaire (260) présente, au niveau de chaque élément de serrage, au moins une fente radiale (27) débouchante.

7. Outil de coupe selon revendication 5 ou 6, caractérisé par le fait que la pièce annulaire (260) présente, dans les zones comprises à chaque fois entre deux éléments de serrage (2) voisins, des fentes radiales (29, 29a) débouchant radialement vers l'extérieur.

8. Outil de coupe selon une des revendications précédentes, caractérisé par le fait que les éléments de coupe (8) ont une section sensiblement en forme de X, avec deux arêtes de coupe (9) utilisables au choix.

9. Outil de coupe selon revendication 8, caractérisé par le fait que les deux faces de serrage (5a, 6a) de chaque éléments de coupe (8, 8a) s'étendent en oblique l'une vers l'autre, symétriquement à un rayon (12) coupant l'axe du corps d'outil.

10. Outil de coupe selon une des revendications précédentes, caractérisé par le fait que les éléments de coupe (8a) présentent des parties de coupe (15) traversantes en métal dur, incorporées ou rapportées par brasage, sur lesquelles sont formées les arêtes de coupe (9).

11. Outil de coupe selon une des revendications 1 à 9, caractérisé par le fait que les éléments de coupe (8) sont réalisés en matériau céramique dur.

12. Outil de coupe selon une des revendications précédentes, caractérisé par le fait que les parties de serrage (16) en forme de nez des éléments de serrage (2, 2a) présentent des faces coniques (18) ayant une forme correspondante à celle des faces de cône (20) des disques de serrage (19).

13. Outil de coupe selon revendication 12, caractérisé par le fait que les faces coniques (18) ont une forme légèrement bombée.

14. Outil de coupe selon une des revendications précédentes, caractérisé par le fait que les éléments de coupe (8, 8a) s'étendent en oblique par rapport à l'axe du corps d'outil (1).

15. Outil de coupe selon une des revendications précédentes, caractérisé par le fait que les éléments de serrage (2, 2a) sont des pièces moulées de précision.

Fig. 1

Fig. 2

Fig. 3

0 096 083

Fig. 4

Fig. 5